(19) Europäisches Patentamt
European Patent Office
Office européen des brevets

(11) **EP 2 119 364 B1**

(12) **EUROPEAN PATENT SPECIFICATION**

(45) Date of publication and mention
of the grant of the patent:
**27.03.2019 Bulletin 2019/13**

(51) Int Cl.:
*A23P 30/40* (2016.01)  *A23L 29/212* (2016.01)
*A23L 9/10* (2016.01)  *A23L 9/20* (2016.01)
*A21D 13/38* (2017.01)  *A21D 13/28* (2017.01)
*A23C 9/137* (2006.01)  *A23C 9/154* (2006.01)

(21) Application number: **09160066.8**

(22) Date of filing: **12.05.2009**

(54) **Whippable composition**

Aufschlagbare Zusammensetzung

Composition à fouetter

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **14.05.2008 NL 2001576**

(43) Date of publication of application:
**18.11.2009 Bulletin 2009/47**

(73) Proprietor: **FrieslandCampina Nederland B.V.
3818 LE Amersfoort (NL)**

(72) Inventors:
• **Heuvelman, Lambertus
7462 DR Rijssen (NL)**
• **Braakhekke, Marcel
5645 KC Eindhoven (NL)**
• **Carmans, Anne Louisa Alfonsine
3550 Heusden-Zolder (BE)**

(74) Representative: **V.O.
P.O. Box 87930
2508 DH Den Haag (NL)**

(56) References cited:
EP-A- 0 149 503       EP-A- 1 287 748
WO-A-00/44241        WO-A-2004/068959
WO-A-2008/116782     CH-A5- 685 590
FR-A- 2 346 986      GB-A- 2 261 805
GB-A- 2 437 239      NL-C- 1 012 877
US-A- 4 732 772      US-A- 6 033 711
US-A1- 2006 193 956

## Description

The invention relates to a whippable composition, a method of making this, and a food product comprising this composition. The invention especially relates to a whippable composition which in non-whipped form has a gelled structure and in whipped form and upon setting has a firm/cuttable structure. The invention is suitable for use in or on pastry.

In the prior art, in or on pastry, both whippable and non-whippable products are employed. The non-whippable products can be subdivided into powders (for instance yellow cream powders) and ready-for-use yellow creams.

The known yellow cream powders are added to water and stirred for a few minutes with, for instance, a mixing appliance, as for instance a Hobart N50, after which the product is applied onto or between pastry. The treatment in the mixing appliance is here intended only to intimately mix powder and water and to break up any lumps by stirring.

In addition, there are the ready-for-use yellow creams as for instance known from WO-A-94/04037. These products are transferred from the package into a mixing appliance and briefly stirred for the purpose of transforming the gelled (crumbly) structure into a homogeneous structure. These products contain gelatin as gel former so that the products, after being rendered smooth by stirring, re-set in the application.

A known whippable yellow cream is for instance described in Example 1 of EP-A-1 080 646. Of such whippable yellow creams, the structure is largely based on gelatin. Indeed, without gelatin injection the products described do not yield a whipped cake filling of sufficient firmness. In these products, one or more ingredients are included that allow the product to be whipped. These products are supplied in gelled condition to the user, who beats them up in a mixing appliance, as for instance a Hobart, for 5 to 15 minutes, whereby a volume increase of 100-150 % is achieved. More in detail, EP-A-1 080 646 describes a split mix process for making whippable yellow cream, where the base without gelatin is not in itself whippable to form a firm product. To this end, during whipping, circa 2 % of gelatin is to be added; this gives the aerated product firmness.

Especially in large bakeries that utilize continuous processes for manufacturing pastry, it is not uncommon to make use of such liquid yellow cream (without gelling agent), where during whipping in a continuous whipping appliance (for instance a Mondomix) a warm gelatin solution is added as gelling agent to give the end product the desired firm structure.

US-A-5,505,982 describes a chocolate mousse having therein gelatin and modified starch which is not further defined. Conventional types of modified starch lose their granular form completely upon a homogenization at 180 bar after a heating step (whereby gelatinization occurs) of 80°C.

The above-mentioned whippable and non-whippable products, and especially such yellow creams, contain gelatin as gelling agent. Gelatin is a gelling agent of animal origin; it is recovered from bones and/or skins of especially bovines and pigs. From considerations of health and religion, there are aversions to the use of gelatin.

Replacement of gelatin in whippable pastry filling, however, is tricky because gelatin, as far as regelling properties (or re-gelation properties) are concerned, stands out far above the other known gel forming polysaccharides. EP-A-1 369 041 describes whippable products without gelatin. The gelatin in desserts in that publication is replaced with an unsaturated emulsifier, in particular with unsaturated monoglycerides. Further, a composition is mentioned which is suitable as gelatin replacer, consisting of unsaturated emulsifier, milk or soy protein, and carbohydrates. Unsaturated monoglycerides in water form a structure showing resemblance to the structure of fat. The final structure has a structure similar to butter crème. In addition, unsaturated emulsifiers, which contain one or more double bonds, have the disadvantage of oxidizing easily. This rapidly gives rise to an unpleasant taste or smell.

An object of the invention is to provide a whippable composition which can serve as a suitable alternative to gelatin-containing compositions.

A further object of the invention is to provide a whippable composition which in non-whipped form has a gelled structure, can be whipped to form a well-processable, airy and scoopable mass having a non-gelled structure, and which, upon processing, forms a gelled structure again in or on the application.

Gelled structure is understood to mean a firm, cuttable, pudding-like structure. A gelled structure is distinguished from a (high) viscous liquid in that it is not liquid.

Yet another object of the invention is to provide a whippable composition which upon whipping provides sufficient firmness to be used as pastry filling.

One or more of the above objects are realized by a composition according to the invention which comprises a combination of starch, polysaccharide and emulsifier.

The invention accordingly relates to a gelatin-free whippable composition having a gelled structure, wherein the content of water-soluble carbohydrates is lower than 24 wt.%, and wherein the composition comprises:

 a) 0.1-1.5 wt.% of emulsifier or combination of emulsifiers,
 b) 0.05-1.5 wt.% of gel forming polysaccharide, and
 c) 1.5-5 wt.% of modified starch, wherein at least a part of the modified starch is present in the form of starch granules, wherein more than 33 % of the starch granules are present in the form of intact starch granules, and wherein at least 10% of the starch granules are present in the form of broken starch granules, and wherein the modified starch comprises a combination of at least a first starch and a second starch, wherein the starch granules of the first starch do not break upon homogenizing and/or heating, and more than half of the starch granules of the second starch do break upon homogenizing and/or heating.

The invention further relates to gelatin-free whippable compositions wherein the content of water-soluble carbohydrates is lower than 20 wt.%, and most preferably lower than 15 wt.%. In this light, in this description and the appended claims, "water-soluble carbohydrates" is understood to mean all mono-, di- and trisaccharides, as well as maltodextrins and glycose syrups. Such a composition gives an eminent overrun and eminent firmness.

The part of the modified starch granules that is present in the form of broken starch granules gives the product deepfreeze stability. In other words: if freeze/thaw stability is desired, a particular amount of broken starch granules needs to be present.

The residual part of the composition corresponds to whippable compositions from the prior art, with omission of the gelatin component. The above-cited publications describe these compositions in detail and for that purpose are incorporated into the present description.

It has been found that the composition according to the invention is eminently suitable as a whippable, ready-for-use yellow cream which, as far as whipping properties are concerned, closely approximates comparable gelatin-containing products. Such yellow creams are neutral products having a pH between 5 and 9 and preferably between 6 and 8.

Starch occurs in the form of starch granules. For use in processes where stringent requirements are imposed on the starch as regards shearing forces and temperature, the starch is modified, thereby preventing the starch granule falling apart or breaking up when subject to heating and/or shearing forces. The extent of modification determines to what extent the granule is resistant to temperature and shearing forces.

The difference between intact, round starch granules and broken starch granules can be well perceived under a transmission light microscope with an iodine/potassium iodide staining. The broken starch granules have the shape of shards.

The composition according to the invention can be offered to buyers in gelled and non-whipped form and subsequently be beaten up by the buyers in a mixing appliance. This yields a homogeneous, non-gelled structure which is well processable. In rest, for instance in or on the application in which the structure is incorporated, the structure firms again, forming a cuttable structure. Moreover, it has been found that the eventual whipped firm structure is freeze/thaw stable since a part of the modified starch granules is broken.

The composition according to the invention comprises modified starch. Suitable modified starches concern the starches originating from maize, preferably waxy maize (maize having a high amylopectin content), tapioca, rice, and potato. Suitable modifications are the E1422 (acetylated distarch adipate) and E1442 (hydroxypropyl distarch phosphate) as well as the starches that are modified by physical route so that the granules of this starch can withstand a high temperature and shearing force.

Compositions containing modified starch, a gel forming polysaccharide, and an emulsifier, for that matter, are already known from the literature. GB-A-2 261 805 and US 2006/193956 relate to ready-for-use desserts of a low fat content. While these compositions have a gelled structure by virtue of the alginates, they are not whippable. This is because whipping of alginate-gelled products results in the rupture of the built-up network of the alginates and the disappearance of the gelled structure which does not later recover anymore either. In addition, the starch granules, if they are present at all, are broken during the UHT and homogenization steps described.

In US-A-5,707,677 topping compositions are described having 0.5-3 wt.% of modified starch, 0.1-1% of polysaccharide gum, 0.1-1% of emulsifier, 0-10% of fat, 25-45% of water-soluble carbohydrates with at least 30% of the total saccharides being tri- and higher saccharides, and 0.2-1% of water-soluble protein. The modified starch is present in the form of whole starch granules. To achieve this, a split-mix process is used in which the starch slurry is separately made and heated and after the homogenization is added to the rest of the product. This method is laborious and has disadvantages from a bacteriological viewpoint; it yields a product with whole starch granules alone.

In GB-A-2 437 239 and EP-A-0 149 503 liquid whipped-cream replacers with a low fat content are described which contain inter alia starch and emulsifiers. These compositions are whippable but have no gelled structure. In the UHT-/ and homogenization treatments described in GB-A-2 437 239, moreover, all starch granules present break. The product of EP-A-0 149 503 has a low starch content of 0.2-0.4%.

In US-A-4,732,772 a cheesecake filling mix is described, containing milk, sugar, modified starch (0.27%), locust bean gum (0.18%), and mono- and diglycerides (0.11%). The mix is acid and liquid and has a smooth consistency. In CH 685 590 A5 dry dessert powders of high stability and whipped products from these powders are described, based on whipping agent, gelling agent, stabiliser and modified starch. The modified starch is acetylated di-starch adipate.

Incidentally, the product according to the invention is distinguished from whipping cream (replacers) and toppings by its firm, gelled form prior to whipping. From other known products, it is distinguished by the formation of the desired structure after whipping, whereas the known products upon whipping lose their structure once formed.

The inventors have surprisingly found that precisely a combination of whole starch granules and broken starch granules (starch shards) leads to the desired properties as sufficient overrun and freeze/thaw stability. Thus, the products according to the invention are characterized by a firm, non-liquid structure before whipping; they are (as a semifinished product) well whippable, they are, upon whipping, well processable, and the whipped products regain a firm, cuttable structure, especially after storage in a refrigerator.

Without wishing to be bound to any theory, it is supposed that prior to whipping the structure to an important extent consists of a polysaccharide structure, and after whipping of a structure built up from a fat building and a partly restored polysaccharide structure. Further, it is supposed that after whipping, the fat building makes a greater contribution to the structure than the restored polysaccharide structure.

In a preferred embodiment, the invention concerns a "bakery custard without gelatin" which is whippable, and which during whipping does not become very thin, and whose structure thereupon recovers again, and in particular obtains a fine firmness again after whipping and cold storage.

Suitable starch types whose granules remain whole during a high heating, as a heating to 130-140°C, and high shearing forces (homogenization, for instance at 50 bar and higher) are *inter alia* the types Clearam TR 3020®, Clearam TR 2010® and Frigex® CL. These modified starch types are hereinbelow designated as Modified Starch type A.

This starch type remains whole during high heating and upon homogenization after such heating, and can be defined as follows:

Starch whose granules at a dosage of 3% in skim milk, upon a heating at 90°C and subsequent cooling off to the homogenization temperature of 70°C, as a result of a homogenization treatment at 150 bar, are broken for less than 10%.

This can be measured by heating the starch slurry in milk and cooling it as specified above, followed by homogenizing at different pressures between 0 and 150 bar, which is not to give rise at any of the pressures to more than 10% of the particles having a size that is less than that of the originally measured particles (without homogenization, only heated). This particle size can be well determined with a Malvern Particle sizer. In detail, measurement is done with a Malvern Mastersizer 2000®, whereby, in addition to water, an amount of product is introduced into the stirred measuring cell, whereupon from the detection of the forward light scattering pattern of laser light the particle size can be determined.

Suitable starch types of which the starch granules break after a heat treatment as a result of high shearing forces are *inter alia* Amylum E2®, Clearam CR 3010®, Clearam CH 3010® and Thermtex®. These modified starch types are hereinbelow designated as Modified Starch type B and do not meet the definition of modified starch type A.

More than 33% of the starch granules are present in the form of intact starch granules. At most 90% of the starch granules are present in the form of intact starch granules.

At least 10% and preferably at least 15% of the starch granules are present in the form of broken, non-whole starch granules. It is preferred that less than 50% and, more preferably, less than 33% of the starch granules are present in the form of broken starch granules.

When no starch granules or less than 10% of them are present in the form of broken granules, this yields a whipped product of sufficient firmness, but insufficient freeze/thaw stability (shrinkage occurs after freezing and thawing; a structure is freeze/thaw-stable when after freezing for 1 day to 3 months at -20 °C, after 1 day of thawing at 5 °C no visible shrinkage of the product occurs). When more than 50%, and actually more than 66% of the granules are present in the form of broken, non-whole granules, this leads to a whipped product that is freeze/thaw-stable (no shrinkage after freezing and thawing), but with the firmness of the whipped end product being insufficient.

In a preferred embodiment, the composition has a total content of starches between 1 and 10 wt.%, preferably between 1.5 and 7 wt.% and most preferably between 2 and 5 wt.%.

The composition according to the invention comprises 1.5-5 wt.% of modified starch. More preferably, the composition comprises 2-4 wt.% of the modified starch.

Gelatin is not used. The well-nigh unique re-gelation properties of gelatin (which are practically absent in other gelling agents), are obtained according to the invention by making use of the just-described two starch types in combination with emulsifier.

Further, the composition according to the invention comprises a gel forming polysaccharide. Gel forming polysaccharides are generally known to the skilled person. Examples of known gel forming polysaccharides are agar, carrageenan, alginate, LM pectin, and gellan gum. Also mixtures of polysaccharides whose combination has gelling properties can be used. Examples of such combinations are for instance xanthan gum combined with locust bean, and locust bean combined with κ-carrageenan. Preferably, the gel forming polysaccharide is selected from the group consisting of gellan gum, ι-carrageenan and LM pectin.

The gel forming polysaccharide constitutes a contribution to the gel formation both in the non-whipped and in the whipped form.

The composition according to the invention contains 0.05-1.5 wt.% of the gel forming polysaccharide.

In cooperation with the starch and the gel forming polysaccharide, also the emulsifier makes a contribution to the structure after whipping and after setting in the whipped form. The emulsifier makes it possible for small air bubbles to be beaten into the product, so that the product is beaten up. The contribution to the firmness probably proceeds via the strengthening of the air bubbles by fat globules, which is promoted by the emulsifier.

In the composition, usually an amount of fat is present. Fats and/or oils to be used can be milk fat or vegetable fats, such as hard coconut fat, palm fat, palm kernel fat or mixtures of oils and fats, which may or may not be hydrogenated or fractionated. Such fat ingredients may be enriched with phytosterol or phytostanol components or contain a low content of trans fatty acids.

Suitable emulsifiers are *inter alia* mono- and diglycerides of saturated fatty acids, milk acid esters of mono- and diglycerides, acetic acid esters of mono- and diglycerides, polyoxyethylene sorbitan monooleate *etc.* and combinations thereof. Preferred are carboxylic acid esters of saturated mono- and/or diglycerides.

The composition according to the invention contains 0.1-1.5 wt.% of the emulsifier or 0.1-1.5 wt.% of a combination of emulsifiers.

The composition according to the invention can be beaten up to form an aerated mass. This is preferably accompanied by a volume increase of at least 50%. More preferred is a volume increase upon whipping of 100-200%. A conventional whipping method as also used for the samples mentioned in the examples below is as follows. The cooled product (1 kg) is transferred into the bowl of a Hobart type N50. With a wire whisk, whipping is done for 5 minutes, after which the properties of the whipped product are determined. After 24 hours' storage in the refrigerator, the firmness of the whipped product is determined using a Stevens FLRA Texture Analyser. The freeze/thaw stability is determined by preserving the sample for 24 hours at -20°C and after this for 24 hours in the refrigerator. The extent of shrinkage is determined by measuring the volume decrease of the product in the bowl by adding water until the bowl is wholly filled again.

For that matter, the products prove to exhibit excellent whippability also in a larger type of Hobart (for instance the NCM 20). With a larger appliance, however, the whipping time needs to be chosen to be somewhat longer.

The present invention further relates to a method for preparing the whippable composition, comprising

- mixing the modified starch, the gel forming polysaccharide and the at least one emulsifier with the other constituents of the whippable composition;
- heating the obtained mixture; and
- homogenizing the obtained mixture.

The mixture is preferably heated to a temperature of 100-145°C, more preferably a temperature of 110-140°C, for 2 to 60 seconds and more preferably for 4 to 30 seconds. Homogenizing is preferably done at a pressure of 25-200 bar, more preferably at a pressure of 50-150 bar. For that matter, homogenization as a rule takes place at a temperature of 60-80°C. When the heating step leads to a product having a temperature above this range, cooling will have to take place first.

According to the invention, a combination of two, preferably chemically, modified starches is used. The first modified starch is modified so strongly as to be able to withstand the heating but also a high-pressure (up to 200 bar) homogenization, without the starch granules breaking. The second modified starch is modified to an extent where the starch granules upon the heating and homogenization are largely broken and appear as broken starch granules in the form of shards.

In the composition according to the invention, the modified starch comprises a first starch and a second starch, wherein the starch granules of the first starch do not break upon homogenizing and/or heating, and the greater part (more than half) of the starch granules of the second starch do break upon homogenizing and/or heating. In a preferred embodiment, at least 75% of the starch granules of the second starch break upon homogenizing and/or heating of the mixture.

The composition according to the invention is particularly suitable to be used as yellow cream, especially as pastry filling.

In a further aspect, the invention accordingly relates to a food product, more particularly a pastry, which comprises a composition according to the invention.

Not only for reasons of health but also for the reason that the product can meet the requirements set for halal or kosher food products, the food product according to the invention is free of gelatin.

In a preferred embodiment, the invention relates to a whippable yellow cream. A whippable yellow cream may, in addition to the composition according to the invention, comprise ingredients such as water, fat, such as coconut fat, sugar, skim milk powder, coloring; and flavoring.

The whippable composition according to the invention comprises in general, in addition to the modified starch, the gel forming polysaccharide and the at least one emulsifier, 65-95 wt.%, preferably 10-85 wt.% of a water-continuous fat emulsion having a fat content of 0.1-10 wt.% and 0.01-8 wt.% of protein; and 0.01-20 wt.% of a sweetener. Further, conventional aromatic and flavoring substances may be present, while the composition may be both neutral and acid.

The invention will now be further illustrated in and by a few examples. The percentages in the examples are percentages by weight, based on the total weight.

## Example 1

Yellow cream composition

| | |
|---|---|
| Skim milk powder | 6.0 % |
| Sugar | 15.0 % |
| Coconut fat | 10.0 % |
| Modified starch type A | 2.7 % |
| Modified starch type B | 0.4 % |
| Emulsifier (mono- and diglycerides) | 0.7 % |
| Polysaccharide | 0.4 % |
| Coloring | q.s. |
| Vanilla aroma | q.s. |
| Water | to 100% |

Preparation of the whippable yellow cream

The water was heated to 70 °C. The vegetable fat was melted and also heated to 70 °C, after which the emulsifier was added to this. The mixture of vegetable fat and emulsifier was added to the water, followed by 5 minutes of emulsification with a Silverson hang-in emulsifying appliance. During stirring the other components (in mixed form) were added.

The resultant mixture was heated and homogenized on a Sterilab plate heat exchanger with the following settings.

| | |
|---|---|
| - preheater | 70 °C |
| - high heater | 120 °C; holding time 4 s |
| - first cooler | 70 °C |
| - homogenizer | single-stage at 100 bar at 70 °C |

Next, the product was filled into packages at 70 °C, after which the packages were cooled to 30 °C in flowing water and then stored at 5 °C.

The whippable yellow cream is freeze/thaw-stable, that is to say, does not exhibit shrinkage.

Comparative Example 1

Yellow cream composition

| | |
|---|---|
| Water | 63.36 % |
| Sugar | 16.5 % |
| Vegetable fat | 10 % |
| Skim milk powder | 4.5 % |
| Gelatin | 2.3 % |
| Alginate | 0.4 % |
| Mono- and diglyceride | 0.80 % |
| Acid sodium phosphate | 0.06 % |
| Flavoring and coloring | 0.09 % |

Preparation of the whippable yellow cream

The fat was heated to 70 °C and, with proper stirring, added to water of 70 °C. The other powder-form components, mixed, were added and stirring was done at 65 °C for 15 minutes. Next, this mixture was heated on a plate pasteurizer, preheated to 70 °C, high-heated at 120 °C for 4 seconds and then cooled back to 70 °C.
The product was homogenized at 80 bar at 70 °C and then filled into polygal bags. These bags were then cooled to 5 °C.
In the comparison of the whipped yellow cream according to the invention with the gelatin-containing whipped yellow cream according to the comparative example, hardly any difference in structure and taste was observed.

Properties of the whippable yellow cream

* The firmness of the non-whipped product was determined with the aid of a Stevens LFRA Texture Analyser, at a product temperature of 5 °C, in a cup of a contents of 500 ml. The measuring body had a diameter of 2.54 cm, the penetration depth is 20 mm and the penetration rate is 1 mm/sec. The resistance experienced by the cylinder at a penetration depth of 20 mm was taken as firmness. The firmness of the whipped product was determined by the same method, only now the whipped product was filled into a cup of a contents of 210 ml.

| | Invention | Comparison |
|---|---|---|
| Firmness before whipping (Stevens*) | 391 g | - |
| Firmness directly after 6 min of whipping in Hobart N50 | 160 g | 137 g |
| Firmness 24 hrs after whipping and stored at 5°C | 280 g | 247 g |
| | 133 % | 146 % |

$$\text{Overrun percentage} \left( \left( \frac{\rho_{non-whipped-product}}{\rho_{whipped-product}} \cdot \right) - 1 \right) x 100\%$$

**Example 2** The influence of whole starch granules and of broken starch granules

Variant 1 with 3% of Modified starch type A (only whole starch granules in the end product) - not part of the invention Variant 2 with 3% of Modified starch type B (only broken starch granules in the end product) - not part of the invention The same method of preparation was used as in Example 1. The compositions (in %) and properties are summarized in the following table.

| | Variant 1 | Variant 2 |
|---|---|---|
| Composition | | |
| Water | + | + |
| Coloring and flavoring | + | + |
| Skim milk powder | 4.5 % | 4.5 % |
| Sugar | 15.0 % | 15.0 % |
| Palm kernel fat | 10.0 % | 10.0 % |
| Emulsifier (mono- and diglycerides) | 0.7 % | 0.7 % |
| Polysaccharide gum | 0.4 % | 0.4 % |
| Modified starch type A | 3.0 % | - |
| Modified starch type B | - | 3.0 % |
| Properties | | |
| Condition of the starch | whole granules | broken granules |
| Overrun percentage (%) | 127 % | 177 % |
| Firmness 24 hours after whipping | 227 g | 88 g |
| Shrinkage after freezing and thawing | 26 % | 0 % |

These data clearly show the effect of the condition of the starch. With whole starch granules the desired firmness is achieved, but the product is not freeze/thaw-stable. With broken starch granules the firmness is too low, but the product (despite the high overrun percentage) is freeze/thaw-stable.

**Example 3** Dessert structures

Also dessert structures can be made according to this type of recipes and method. Lowering of the content of gelling polysaccharide leads to a less firm whipped end product. Composition and properties of this type of structures are listed in the following table.

| Composition | |
| --- | --- |
| Water | + |
| Coloring and flavoring | + |
| Skim milk powder | 4.5 % |
| Sugar | 15.0 % |
| Vegetable fat | 10.0 % |
| Sodium caseinate | 0.50 % |
| Modified starch type A | 2.7 % |
| Modified starch type B | 0.4 % |
| Emulsifier (mono- and diglycerides) | 0.6 % |
| Polysaccharides | 0.5% |
| Properties | |
| Condition of the starch | whole + broken granules |
| Overrun percentage (%) | 134 % |
| Firmness 24 hours after whipping | 132 g |

This structure is very suitable as a base for luxury desserts, to which directly after whipping different further ingredients may be added, such as bits of fruit, coffee, hazelnut paste/ground nuts *etc.*

Example 4 - not part of the invention

| | |
| --- | --- |
| stabilized yoghurt | to 100% |
| vegetable fat | 10% |
| sugar | 15% |
| emulsifier | 0.70% |
| starch a | 2.70% |
| starch b | 0.40% |
| stabilizer | 0.40 % |
| coloring | q.s. |
| aroma | q.s. |

The stabilized yoghurt was heated to 70°C, after which the emulsifier was added. The mixture of fat plus emulsifier was added to the stabilized yoghurt of 70°C, after which emulsifying was done for 5 minutes.
During stirring, next, the other components were added.
After this, the complete mixture was heated and homogenized as in Example 1, though heating was done not to 120° C but to 100°C.

**Claims**

1.  A gelatin-free whippable composition having a gelled structure, wherein the content of water-soluble carbohydrates is lower than 24 wt.%, and wherein the composition comprises:

    a) 0.1-1.5 wt.% of emulsifier or combination of emulsifiers,

b) 0.05-1.5 wt.% of gel forming polysaccharide, and

c) 1.5-5 wt.% of modified starch, wherein at least a part of the modified starch is present in the form of starch granules, wherein more than 33 % of the starch granules are present in the form of intact starch granules, and wherein at least 10 % of the starch granules are present in the form of broken starch granules and wherein the modified starch comprises a combination of at least a first starch and a second starch, wherein the starch granules of the first starch do not break upon homogenizing and/or heating, and more than half of the starch granules of the second starch do break upon homogenizing and/or heating.

**2.** A gelatin-free whippable composition according to claim 1, wherein between more than 33% and 90% of the starch granules are present in the form of intact starch granules.

**3.** A gelatin-free whippable composition according to claim 1 or 2, wherein between 10% and less than 66% of the starch granules are present in the form of broken starch granules.

**4.** A gelatin-free whippable composition according to any of the preceding claims, wherein at least 75% of the starch granules of the second starch break upon homogenizing and/or heating of the mixture.

**5.** A gelatin-free whippable composition according to any one of the preceding claims, wherein the gel forming polysaccharide is selected from the group consisting of gallan gum, carrageenan and pectin; and/or wherein the emulsifier comprises a carboxylic acid ester of saturated mono- and diglycerides.

**6.** A gelatin-free whippable composition according to any one of the preceding claims, with a total content of starches between 1 and 10 wt.%, preferably between 1.5 and 7 wt.%, and most preferably between 2 and 5 wt.%.

**7.** A gelatin-free whippable composition according to any one of the preceding claims, which composition is whippable to a volume increase of at least 50%, and is preferably whippable to a volume increase of 50-200%.

**8.** A gelatin-free whippable composition according to any one of the preceding claims in the form of a whippable food product, and preferably in the form of a whippable yellow cream.

**9.** A gelatin-free whipped composition having a composition as defined in any one of claims 1-6, or 8.

**10.** A gelatin-free whipped composition according to claim 9 which after processing gels again upon cooling.

**11.** A method for the preparation of a gelatin-free whippable composition according to any one of the preceding claims comprising:

- mixing the modified starch, the gel forming polysaccharide and the at least one emulsifier in a liquid phase;
- heating the obtained mixture, preferably to a temperature of 110-140°C, for 4 to 30 seconds;
- homogenizing the obtained mixture, preferably at a pressure of 25-200 bar, more preferably at a pressure of 50-150 bar.

**12.** A food product comprising a gelatin-free composition according to any one of claims 1-11, preferably in the form of pastry.

**Patentansprüche**

**1.** Gelatinefreie, aufschlagbare Zusammensetzung mit einer gelierten Struktur, wobei der Gehalt an wasserlöslichen Kohlenhydraten weniger als 24 Gew.-% beträgt und wobei die Zusammensetzung umfasst:

a) 0,1 bis 1,5 Gew.-% Emulgator oder Kombination von Emulgatoren,

b) 0,05 bis 1,5 Gew.-% gelbildendes Polysaccharid, und

c) 1,5 bis 5 Gew.-% modifizierte Stärke, wobei mindestens ein Teil der modifizierten Stärke in Form von Stärkekörnern vorliegt, wobei mehr als 33% der Stärkekörner in Form von intakten Stärkekörnern vorliegen, und wobei mindestens 10% der Stärkekörner in Form gebrochener Stärkekörner vorliegen und wobei die modifizierte Stärke eine Kombination aus mindestens einer ersten Stärke und einer zweiten Stärke umfasst, wobei die Stärkekörner der ersten Stärke beim Homogenisieren und/oder Erwärmen nicht brechen und mehr als die Hälfte der Stärkekörner der zweiten Stärke beim Homogenisieren und/oder Erwärmen brechen.

2. Gelatinefreie aufschlagbare Zusammensetzung nach Anspruch 1, wobei zwischen mehr als 33% und 90% der Stärkekörner in Form von intakten Stärkekörnern vorliegen.

3. Gelatinefreie aufschlagbare Zusammensetzung nach Anspruch 1 oder 2, wobei zwischen 10% und weniger als 66% der Stärkekörner in Form von gebrochenen Stärkekörnern vorliegen.

4. Gelatinefreie aufschlagbare Zusammensetzung nach einem der vorhergehenden Ansprüche, wobei mindestens 75% der Stärkekörner der zweiten Stärke beim Homogenisieren und/oder Erwärmen der Mischung brechen.

5. Gelatinefreie aufschlagbare Zusammensetzung nach einem der vorhergehenden Ansprüche, wobei das gelbildende Polysaccharid ausgewählt ist aus der Gruppe, bestehend aus Gallangummi, Carrageenan und Pektin; und/oder wobei der Emulgator einen Carbonsäureester gesättigter Mono- und Diglyceride umfasst.

6. Gelatinefreie aufschlagbare Zusammensetzung nach einem der vorhergehenden Ansprüche, mit einem Gesamtgehalt an Stärken zwischen 1 und 10 Gew.-%, vorzugsweise zwischen 1,5 und 7 Gew.-% und am meisten bevorzugt zwischen 2 und 5 Gew.-%.

7. Gelatinefreie aufschlagbare Zusammensetzung nach einem der vorhergehenden Ansprüche, wobei die Zusammensetzung bis zu einer Volumenzunahme von mindestens 50% aufschlagbar ist und vorzugsweise bis zu einer Volumenzunahme von 50 bis 200% aufschlagbar ist.

8. Gelatinefreie aufschlagbare Zusammensetzung nach einem der vorhergehenden Ansprüche in Form eines aufschlagbaren Lebensmittelprodukts und vorzugsweise in Form einer aufschlagbaren gelben Creme.

9. Gelatinefreie geschlagene Zusammensetzung mit einer Zusammensetzung wie in einem der Ansprüche 1 bis 6 oder 8 definiert.

10. Gelatinefreie geschlagene Zusammensetzung nach Anspruch 9, die nach dem Verarbeiten nach Abkühlen wieder geliert.

11. Verfahren zur Herstellung einer gelatinefreien aufschlagbaren Zusammensetzung nach einem der vorhergehenden Ansprüche, umfassend:

- Mischen der modifizierten Stärke, des gelbildenden Polysaccharids und des mindestens einen Emulgators in einer flüssigen Phase;
- Erwärmen der erhaltenen Mischung, vorzugsweise auf eine Temperatur von 110 bis 140 °C, für 4 bis 30 Sekunden;
- Homogenisieren der erhaltenen Mischung, vorzugsweise bei einem Druck von 25 bis 200 bar, bevorzugter bei einem Druck von 50 bis 150 bar.

12. Lebensmittelprodukt, umfassend eine gelatinefreie Zusammensetzung nach einem der Ansprüche 1 bis 11, vorzugsweise in Form von Gebäck.

**Revendications**

1. Composition sans gélatine pouvant être fouettée ayant une structure gélifiée, dans laquelle la teneur en hydrates de carbone solubles dans l'eau est inférieure à 24 % en poids, laquelle composition comprend :

a) 0,1 à 1,5 % en poids d'un émulsionnant ou d'une combinaison d'émulsionnants,
b) 0,05 à 1,5 % en poids d'un polysaccharide formant un gel, et
c) 1,5 à 5 % en poids d'un amidon modifié,
dans laquelle au moins une partie de l'amidon modifié est présente sous la forme de granules d'amidon, dans laquelle plus de 33 % des granules d'amidon sont présents sous la forme de granules d'amidon intacts, et dans laquelle au moins 10 % des granules d'amidon sont présents sous la forme de granules d'amidon rompus, et dans laquelle l'amidon modifié comprend une combinaison d'au moins un premier amidon et un deuxième amidon, dans laquelle les granules d'amidon du premier amidon ne se rompent pas suite à une homogénéisation et/ou un chauffage, et plus de la moitié des granules d'amidon du deuxième amidon se rompent suite à une homogénéisation et/ou un chauffage.

2. Composition sans gélatine pouvant être fouettée selon la revendication 1, dans laquelle entre plus de 33 % et 90 % des granules d'amidon sont présents sous la forme de granules d'amidon intacts.

3. Composition sans gélatine pouvant être fouettée selon la revendication 1 ou 2, dans laquelle entre 10 % et moins de 66 % des granules d'amidon sont présents sous la forme de granules d'amidon rompus.

4. Composition sans gélatine pouvant être fouettée selon l'une quelconque des revendications précédentes, dans laquelle au moins 75 % des granules d'amidon du deuxième amidon se rompent suite à une homogénéisation et/ou un chauffage du mélange.

5. Composition sans gélatine pouvant être fouettée selon l'une quelconque des revendications précédentes, dans laquelle le polysaccharide formant un gel est choisi dans l'ensemble constitué par la gomme gallane, la carraghénane et la pectine ; et/ou dans laquelle l'émulsionnant comprend un ester d'acide carboxylique et de mono- et di-glycérides saturés.

6. Composition sans gélatine pouvant être fouettée selon l'une quelconque des revendications précédentes, ayant une teneur totale en amidons comprise entre 1 et 10 % en poids, de préférence entre 1,5 et 7 % en poids, et tout spécialement entre 2 et 5 % en poids.

7. Composition sans gélatine pouvant être fouettée selon l'une quelconque des revendications précédentes, laquelle composition peut être fouettée jusqu'à une augmentation de volume d'au moins 50 %, et peut de préférence être fouettée jusqu'à une augmentation de volume de 50 à 200 %.

8. Composition sans gélatine pouvant être fouettée selon l'une quelconque des revendications précédentes, sous la forme d'un produit alimentaire pouvant être fouetté, et de préférence sous la forme d'une crème jaune pouvant être fouettée.

9. Composition sans gélatine pouvant être fouettée ayant une composition telle que définie dans l'une quelconque des revendications 1 à 6 ou 8.

10. Composition sans gélatine pouvant être fouettée selon la revendication 9, qui, après traitement, gélifie de nouveau suite à un refroidissement.

11. Procédé pour la préparation d'une composition sans gélatine pouvant être fouettée selon l'une quelconque des revendications précédentes, comprenant :

- le mélange de l'amidon modifié, du polysaccharide formant un gel et de l'au moins un émulsionnant dans une phase liquide ;
- le chauffage du mélange obtenu, de préférence à une température de 110 à 140°C, pendant 4 à 30 secondes ;
- l'homogénéisation du mélange obtenu, de préférence sous une pression de 25 à 200 bar, mieux encore sous une pression de 50 à 150 bar.

12. Produit alimentaire comprenant la composition sans gélatine pouvant être fouettée selon l'une quelconque des revendications 1 à 11, de préférence sous la forme d'une pâtisserie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9404037 A
- EP 1080646 A
- US 5505982 A
- EP 1369041 A
- GB 2261805 A
- US 2006193956 A
- US 5707677 A
- GB 2437239 A
- EP 0149503 A
- US 4732772 A
- CH 685590 A5